# EUROPEAN PATENT SPECIFICATION

(11) **EP 1 757 061 B1**
(45) Date of publication and mention of the grant of the patent: **19.05.2010**
(21) Application number: 05746269.9
(22) Date of filing: 23.05.2005
(51) Int. Cl.: H04L 29/06

(54) **EXTENSIONS TO FILTER ON IPV6 HEADER**
ERWEITERUNGEN ZUR FILTERUNG VON IPV6-KOPFTEILEN
EXTENSIONS APPORTEES AUX FILTRE SUR TETE DE RESEAU DE VERSION 6 DU PROTOCOLE INTERNET

(30) Priority: 25.05.2004 US 852680; 02.07.2004 US 882675
(43) Date of publication of application: 28.02.2007
(73) Proprietor: Spyder Navigations L.L.C., Wilmington, DE 19801 (US)
(72) Inventor: LE, Frank, Irving, TX 75063 (US); FACCIN, Stefano, Dallas, TX 75229-2622 (US)
(74) Representative: Simmelvuo, Markku Kalevi
(86) International application number: PCT/IB2005/001401
(87) International publication number: WO 2005/120010

(56) References cited:
- WO-A2-2004/001520
- STIEMERLING M.: 'NAT/Firewall NSIS Signaling Layer Protocol (NSLP).' NSIS WORKING GROUP., [Online] 21 May 2004, XP015024466 Retrieved from the Internet: <URL:Http://www.tschofenig.com/drafts/draft -ietf-nsis-nslp-natfw-02.txt>

## Description

### Field of the Invention

The present invention relates to firewalls used in most Internet Protocol networks to reduce the threats and/or attacks against users of those networks and particularly to using firewalls in new applications, such as Voice over IP applications.

### Background of the Invention

A firewall is a packet filtering device that matches an incoming packet against a set of policy rules and applies the appropriate actions to the packet. The firewall essentially filters incoming packets coming from external networks to the network protected by the firewall and either accepts, denies or drops the incoming packets of information. Current firewalls may use a packet filtering method, a proxy service method or a stateful inspection method to control traffic flowing into and out of the network. The packet filtering method allows the firewall to analyze incoming packets against a set of filters. Packets that are allowed through the filters are sent to the requesting/receiving system and all other packets are discarded. The proxy service method enables the firewall to retrieve information sent from the Internet and then the firewall sends the information to the requesting/receiving system and vice versa. The stateful inspection method enables the firewall to compare certain key parts of the packet to a database of trusted information. Information travelling from inside the firewall to the outside is monitored for specific defining characteristics and then incoming information is compared to these characteristics. If the comparison yields a reasonable match, the information is allowed through, otherwise, it is discarded.

Current firewalls use policy rules for decisions on data packet treatment. The policy rules include a 5-tuple and an associated action. The 5-tuple includes a source IP address, a destination IP address, a transport protocol, a source port number and a destination port number. The source address is the IP address from where the data originates. The destination address is the IP address to where the data is headed. The protocol is the protocol carried in the IP data packet. The source port is the transport layer port from where the data originates and the destination port is the transport layer port to where the data is headed. When an incoming data packet matches the 5-tuple policy rule, the firewall applies an appropriated policy rule action to the data packet. Policy rule actions implemented by the firewall are an allow action for enabling the firewall to forward the packet through the firewall, a deny action for enabling the firewall to block the data packet and discard it, and an other action for enabling the firewall to log, divert or process the data packet in a way that is different from the allow action and the deny action. Therefore, based on the 5-tuples in the policy rules, the firewall decides to either let incoming packets pass through the firewall, drop incoming packets or perform another function, such as logging the incoming packet.

Although firewalls provides security for networks, they are also obstacles to many new applications since firewalls using the 5-tuple rules only allow specific applications, for example web browsing from a node in the network protected by the firewall. Other applications, such as IP telephony and peer-to-peer applications use incoming data that does not match the rules of present firewalls. Therefore, the incoming traffic for these applications is dropped by current firewalls.

Several solutions are created to enable applications using incoming data that does not match the rules of present firewalls to traverse a firewall. One solution is the Next Step Of Signaling (NSIS) firewall protocol that is a path-coupled protocol carried over the NSIS Network Transport Layer Protocol. The Network Transport Layer Protocol is used to open pin-holes in the firewalls and thereby enable any type of communication between endpoints across networks, even in the presence of firewalls. Specifically, the NSIS Network Transport Layer Protocol is used to install such policy rules for enabling NSIS signalling messages in all firewalls along the data path and the firewalls are configured to forward data packets matching the policy rules provided by a NSIS Signaling Layer Protocol (NSLP). Therefore, applications located at endpoints/hosts establish communication between them and use the NSLP signalling to establish policy rules on a data path which allows any type of data between the hosts to travel unobstructed from one endpoint to another.

According to the NSIS protocol, a data sender that intends to send data to a data receiver starts the NSLP. A NSIS initiator at the data sender sends NSLP signalling request messages towards the address of the data receiver. The NSLP request messages are processed each time they are passed through a NSIS forwarder, i.e., a signalling entity between a NSIS initiator and NSIS responder that propagates NSIS signalling through the network. Each NSIS forwarder in the network processes the message, checks local policies for authorization and authentication, possibly creates policy rules and forwards the signalling message to the next NSIS node. The request message is forwarded until it reaches the NSIS responder which checks the received message and generates response message(s) that are sent to the requesting NSIS initiator through the NSIS forwarder(s). The response messages are also processed at each NSIS forwarder in the data path. After the requesting NSIS initiator receives a successful response message(s), the data sender associated with the requesting NSIS initiator can send any type of data through the data path established during the NSIS setup to the data receiver associated with the responding NSIS responder. This creates a pinhole in the firewall, wherein data not implementing the conventional policy rules will be allowed through the firewall via the data path established during the NSIS setup.

Nevertheless, current firewall configuration protocols, such as NSIS, only allows a limited set of parameters to be included in the signalling messages. Because of the limited number of parameters allowed in the protocols, the firewall is provided with limited information when data is transmitted between nodes and some essential information may not be provided to the firewall. In the absence of the needed information, some firewall functions may be disabled thereby lowering the protection provided by the firewall.

For example, the Mobile Internet Protocol version 6 (IPv6) protocol enables Internet Protocol (IP) mobility for IPv6 nodes and allows IPv6 nodes to be reachable via the node's IPv6 home address irrespective of any link to which the mobile node is attached. While a node is away from its home address, it is associated with a care-of address which provides information about the mobile node's current location. Thereafter, IPv.6 packets addressed to the mobile node's home address are transparently routed to the associated care-of address. To support this and other mobility functions, the mobile IPv6 protocol includes extensions that are not present in current protocols. A fundamental part of the mobile IPv6 protocol is route optimization that allows the protocol to optimize the routing of packets between a mobile node and its correspondent node and therefore optimize the performance of the communications. The parameters associated with route optimization are also not present in present protocols. An IP protocol including a home address field and a routing header field may be used by the mobile node. As such, the mobile node implementing the mobile IP protocol, if protected by a firewall, may want to create packet filters in the firewall that filter incoming IP packets based on the home address field and the routing header field, in addition to other parameters. However, since current firewall filters do not support the IPv6 protocol and more particularly the IPv6 extension headers such as the destination option (for example, the home address and the routing header), the packets to and from the mobile node will likely be dropped by current firewalls.

Traditional systems do not solve the above-mentioned problems regarding communication through firewalls. For example, WO publication WO 2004/001520 describes a quality of service signalling packet for arranging quality of service connections between a mobile node and a corresponding node. The WO publication mentions that Internet Protocol version 6 (IPv6) protocol may be used in a mobile communications network, but fails to disclose a method by which firewalls are able to support the IPv6 protocol. A document titled "NAT/Firewall NSIS Signalling Layer Protocol (NSLP)", which is available e.g. at http://www.tschofenig.com/ drafts/draft-ietf-nsis-nslp-natfw-02.txt, describes an NSLP for network address translators (NAT) and firewalls. The document also provides a potential Internet Protocol version 4 (IPv4) protocol to IPv6 protocol transition scenario, but fails to disclose a method by which firewalls are able to support the IPv6 protocol.

A previously created Topology-Insensitive Service Traversal (TIST) protocol allowed more features/parameters to be included in the signalling protocol for firewall policy rules. For example, the policy rules could include Transmission Control Protocol (TCP) flags, and the firewall could perform filtering functions on a security parameter index and other fields. The TIST protocol, however, is defined for Internet Protocol version 4 (IPv4). Internet Protocol version 6 (IPv6) include other parameters, such as different destination options and extension headers that are not included in IPv4. As such, the TIST protocol cannot support all of the parameters in IPv6. Although the TIST protocol includes an Offset object, the TIST protocol still cannot support all of the parameters in IPv6 because the TIST offset object field has a fixed format. In the IPv6 protocol, on the other hand, fields may be at variable locations from one packet to another. For example, in the IPv6 protocol, optional Internet layer information are encoded in separate headers. The IPv6 protocol may include zero or more headers, each of which is associated with specific Internet layer information and identified by a distinct Next Header value.

Since most business networks deploy firewalls that do not support IPv6 protocols, and more particularly the extension headers such as the ones specificed by the mobile IPv6 protocol, an apparatus and method is needed for creating filters in firewalls to support IPv6 and mobile IPv6 protocols.

### Summary of the invention

According to one aspect of the invention, there is provided a firewall program for providing protection for at least one user or resource on a network. The firewall program includes installation means for installing policy rules that are transmitted from at least one network entity to the firewall program. The policy rules comprise an option field for allowing the at least one network entity to send additional information to the firewall program. The additional information relates to at least one type of information used in at least one of an Internet Protocol version 6 protocol or a mobile Internet Protocol.

According to another aspect of the invention, there is provided a method for protecting systems connected to at least one firewall by providing additional information to the at least one firewall on states to be created. The method includes the steps of transmitting policy rules from at least network entity connected to the at least one firewall and installing the policy rules on the at least one firewall. The policy rules comprise an option field for allowing the at least one network entity to send additional information to the at least one firewall. The additional information relates to at least one type of information used in at least one of an Internet Protocol version 6 protocol or a mobile Internet Protocol version 6 protocol.

According to another aspect of the invention, there is provided an apparatus for protecting systems connected to at least one firewall by providing additional information to at least one firewall on states to be created. The apparatus includes receiving means for receiving policy rules from at least one network entity connected to the at least one firewall. The apparatus also includes installation means for installing the policy rules on the at least one firewall. The policy rules comprise an option field for allowing the at least one network entity to send additional information to the at least one firewall. The additional information relates to at least one type of information used in at least one of a Internet Protocol version 6 protocol or a mobile Internet Protocol version 6 protocol.

According to another aspect of the invention, there is provided a network implementing at least one firewall for providing protection for at least one user or resource on the network. The network comprises an apparatus for protecting systems connected to at least one firewall by providing additional information to at least one firewall on states to be created. The apparatus includes receiving means for receiving policy rules from at least one network entity connected to the at least one firewall. The apparatus also includes installation means for installing the policy rules on the at least one firewall. The policy rules comprise an option field for allowing the at least one network entity to send additional information to the at least one firewall. The additional information relates to at least one type of information used in at least one of a Internet Protocol version 6 protocol or a mobile Internet Protocol version 6 protocol. The network further comprises at least one host system protected by the at least one firewall, the host system being configured to send and receive information from external host systems through the at least one firewall.

### Brief Description of the Drawings

The accompanying drawings, which are included to provide a further understanding of the invention and are incorporated in and constitute a part of this specification, illustrate embodiments of the invention that together with the description serve to explain the principles of the invention.

In the drawings:
Figure 1 illustrates a network that includes firewalls for protecting end users from threats and attacks from outside users;
Figure 2 illustrates the steps implemented in setting up communications in a network that implements the NSIS protocol;
Figure 3a illustrates the format of message transmitted in the inventive system;
Figure 3b illustrates the NSLP objects in each message type;
Figure 4 illustrates the elements of the inventive policy rule object; and
Figure 5 illustrates the steps implemented by a create session request message in an embodiment of the invention.

### Description of embodiments

Reference will now be made in detail to the preferred embodiments of the present invention, examples of which are illustrated in the accompanying drawings. The present invention described below extends firewall configuration protocols to carry more information about the states to be created during communications between network nodes.

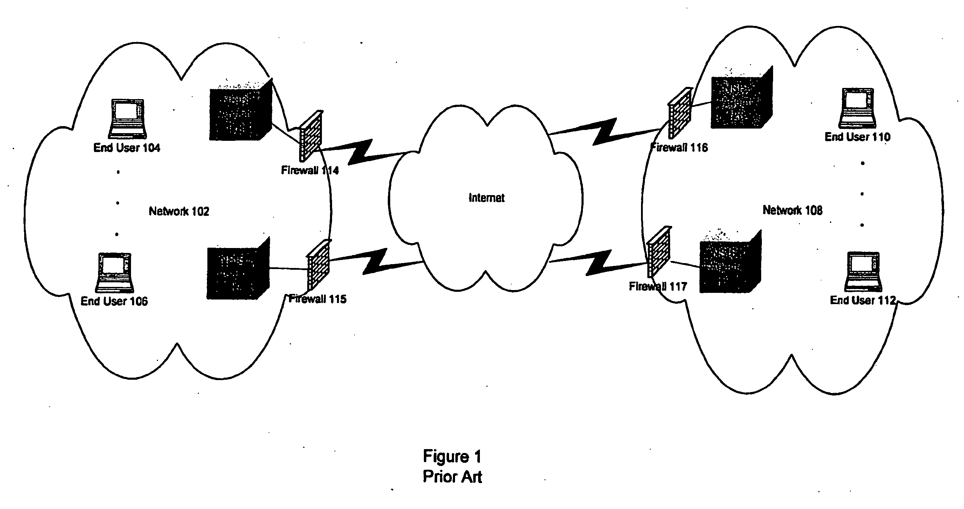

The present invention relates to extended firewall configuration protocols to enable an end user to include information on a state to be created. Figure 1 illustrates a network that includes firewalls for protecting end users, servers and other network resources from threats and/or attacks from outside users or users of the network. The network includes a first network 102 that includes multiple end users 104-106 and a second network 108 that includes end users 110-112. The network also includes firewalls 114 and 115 for protecting end users 104-106 from external attacks and firewalls 116 and 117 for protecting end user 110-112 from external attacks. It should be apparent to one skilled in the art, that firewalls 114-117 may include one or more packet filtering devices for matching packets travelling through those devices against a set of police rules and applying the appropriate action to the data packets. Although firewalls are placed more toward the edge of a network, it should be apparent to one skilled in the art that firewalls 114-117 may be located at different locations in the network, for example, at enterprise network borders, within enterprise networks, or at mobile phone gateways. It should also be apparent to one skilled in the art, that networks 102 and 108 may include other network entities, such as servers, that may also transmit information through firewalls 114-117.

In one embodiment of the invention, firewalls 114-117 may implement Next Step of Signaling (NSIS) protocol where after communication setup between endpoints/hosts, any communication between the endpoints across the network is enabled, even in the presence of firewalls. Although this embodiment illustrates the claimed invention using the NSIS protocol, it should be apparent to those of ordinary skill in the art, that the claimed invention is applicable to any firewall configuration protocol. The NSIS signalling messages exchanged between the hosts during communication setup are used to install appropriate policy rules in all firewalls 114-117 along the communications path and firewalls 114-117 are configured to forward subsequent data packets matching the policy rules provided by the NSIS signalling messages. This allows data to travel from one end point to another end point unobstructed by firewalls 114-117. In order to run NSIS signalling across a data path, it is necessary that each firewall in the data path have an associated NSIS agent 118-121.

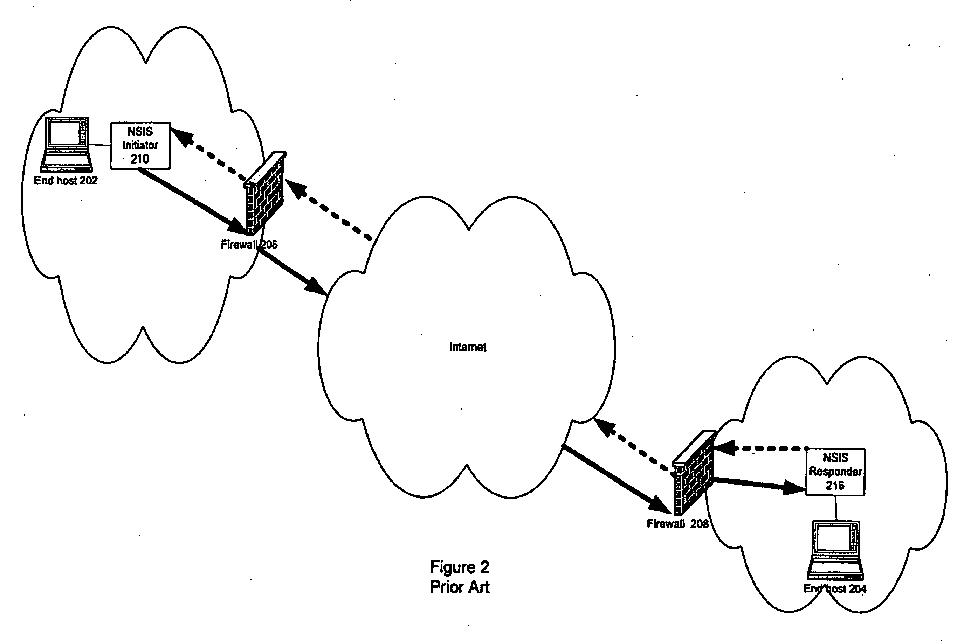

Figure 2 illustrates the steps implemented in setting up communications in a network that implements the NSIS protocol. According to figure 2, both end hosts 202 and 204 are behind firewalls 206 and 208 that are connected via the Internet. Firewalls 206 and 208 provide traversal service for NSIS Signaling Layer Protocol (NSLP) in order to permit NSIS messages to reach end hosts 202 and 204. As such, during communication setup, firewalls 206 and 208 process NSIS signalling and establish appropriate policy rules so that subsequently received data packets conforming to the policy rules can traverse firewalls 206 and 208. Trust relationships and authorization are very important for the protocol machinery. Various kinds of trust relationships, such as peer-to-peer trust relationship, intra-domain trust relationship, end-to-middle trust relationship, and one or more trust relationships may exists between network nodes.

Specifically, during communications setup, NSLP for firewall traversal is carried over the NSIS Transport Layer Protocol. NSLP messages are initiated by a NSIS initiator 210, handled by NSIS forwarders 206 and 208 and processed by NSIS responder 216. A data sender, such as end host 202, that intends to send data messages to a data receiver, such as end host 204, must start its NSLP signalling, whereby NSIS initiator 210 associated with the data sender starts NSLP signalling towards the address of the data receiver. The NSLP request messages from NSIS initiator 210 are process each time the messages pass through NSIS forwarders 206 and 208 that support NSLP functions. NSIS forwarders 206 and 208 process the messages, check local policies for authorization and authentication, possible create policy rules and forward the signalling messages to the next node. As such, the request messages are forwarded until it reaches NSIS responder 216. NSIS responder 216 checks the received message, performs the applicable processes and generates response messages that are sent back to NSIS initiator 210 via the same communications path as the request messages. The response messages are also processed at NSIS forwarders 206 and 208 during transmission from NSIS responder 216 to NSIS initiator 210. Upon receiving a successful response message, the data sender may thereafter send data flows to the data receiver.

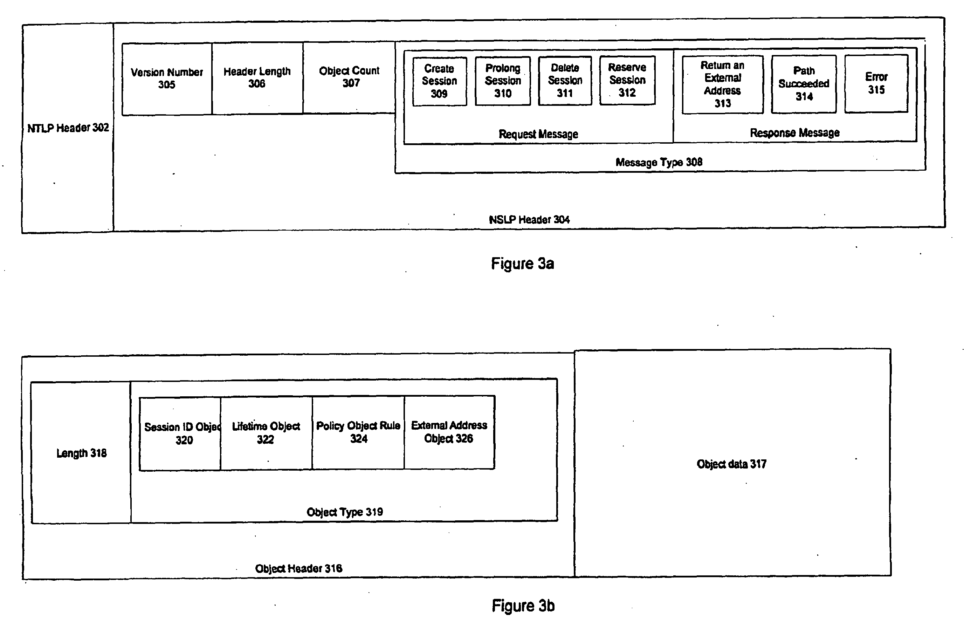

Figure 3a illustrates the format of a message transmitted in the inventive system. All NSIS messages include a NSIS Transport Layer Protocol header 302 and a NSLP header 304. A NSLP node uses header 300 to distinguish between a request message and a response message. NSLP header 304 includes a version number 305, a header length 306 for specifying the length of the NSLP payload in bytes, object count number 307 for specifying the number of objects that follow after NSIS header 300 and the message type 308 for specifying if the message is a response or request message. For request messages, four sub-types are defined in message type 308. The sub-types are create-session 309, prolong session 310, delete session 311 and reserve session 312. Create-session 309 request message is used to create policy rules on the firewalls so that data packets of a specified data flow can traverse the firewall. Prolong session 310 request message is used to extend the lifetime of a NSLP session. The NSIS initiator uses the prolong session request message to request a certain lifetime extension. Delete session request message 311 is used to delete a NSLP session. Reserve session 312 request message is used to reserve a session. For response messages, three sub-types are defined in message type 308. The sub-types are return-an-external address 313, path succeeded 314 and error 315. Return-an-external address 313 response message is sent as a successful reply to a reserve external address request. Path succeeded 314 response message is sent as a successful reply to a create session request message 309. Error response message 315 reports any error occurring at the NSIS forwarder or NSIS responder to the NSIS initiator.

Each message type includes one ore more NSLP objects which carry the actual information about policy rules, lifetimes and error conditions. Figure 3b illustrates the NSLP objects in each message type. All objects share the same object header 316 which is followed by the object data 317. Object header 316 includes the total length 318 of the object and the object type 319 that identifies data 317. The format of object data 317 depends on object type 319. Object type 319 include a session id object 320 for providing a randomly generated session ID handed by the NSIS initiator to the NSIS session at a particular node, the lifetime object 322 for indicating the lifetime of a NSLP session, policy rule objects 324 that includes the flow information for the data traffic from the data sender to the data receiver, and an external address object 326 that includes a reserved external address and if applicable a port number.

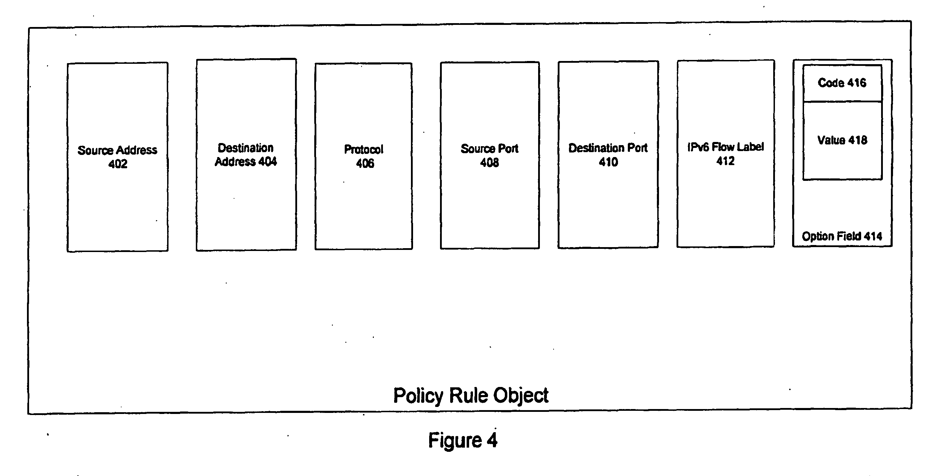

Figure 4 illustrates the elements of the inventive policy rule object. The policy rule object includes a source address 402, a destination address 404, a protocol 406, a source port 408, a destination port 410, and IPv6 flow label 412 and an option field 414. Source address 402 is the IP address from where the data originates. For example, if data sender 104 illustrated in figure 2 is sending data to data receiver 110, source address 402 will be the address of data sender 194. Destination IP address 404 is the IP address to where the data is headed. Again returning to figure 2, destination address 404 is either the data receiver's 110 address or the public address that data receiver 110 reserved for itself. Protocol 405 is the protocol carried in the IP data packet. Source port 408 is the transport layer port from where the data originates and destination port 410 is the transport layer port to where the data is headed. IPv6 flow label 412 is a label for the IPv6 flow. Option field 414 indicates that the filters in the firewall should include a destination option, a routing header or other IPv6 header information. Code 416 in option field 414 indicates the type of information that follows. For example, option field 414 may include a home address option that is required by the firewall filter. In this case, code 416 will assigned home address code and value 418 will include the home IP address of a mobile node. As is apparent to one skilled in the art, option field 414 may be broken up to include multiple codes 416 and corresponding values 418. For example, option field may include a home address option, a routing header type 0 and a routing header type 1. Various currently known means may be implemented to allow the firewall to determine how many values are provided by option field 414 and what each value represents.

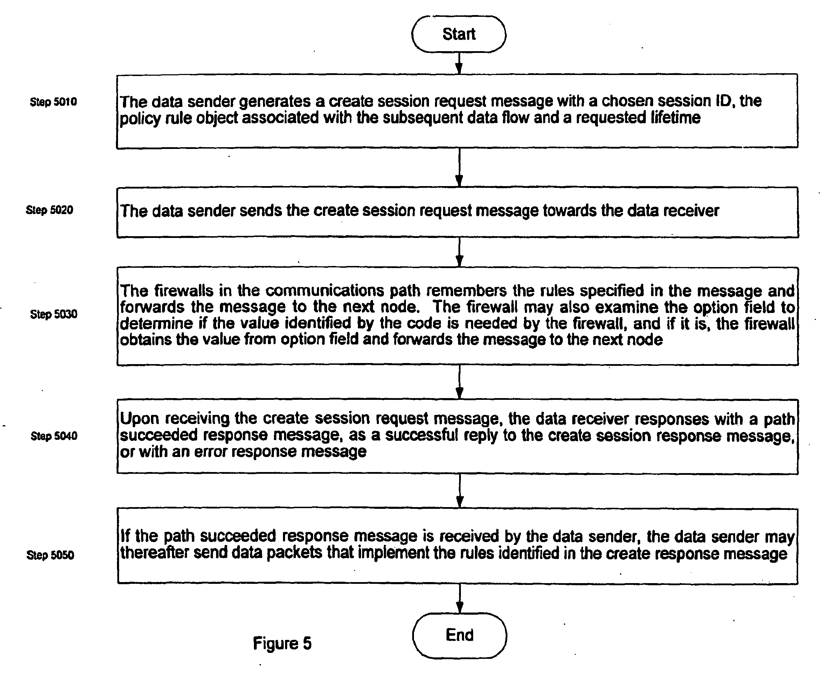

Figure 5 illustrates the steps implemented by create-session message 309 for enabling communication between a data sender and a data receiver. Thereafter, both the data sender and the data receiver are enabled to exchange data packets even with one or more firewalls on the communications path. In step 5010 the data sender generates create-session request message 309 with a chosen session ID, the policy rule object associated with the subsequent data flow and a requested lifetime. In Step 5020, the data sender sends create-session request message 309 towards the data receiver. In Step 5030, the firewalls in the communications path remember the rules specified in the message and forward the message to the next node. The firewall may also examine the option field to determine if the value identified by code is needed by the firewall. If it is, the firewall obtains the value from option field prior to forwarding the message to the next node. The firewall creates the packet filters as specified in the policy object rule. In Step 5040, upon receiving create-session 309 request message, the data receiver responses with path succeeded 314 response message, as a successful reply to create-session 309 response message, or with error 315 response message. In Step 5050, if path succeeded 314 response message is received by the data sender, the data sender may thereafter send data packets that implement the rules identified in create- response message. In Step 5060, the firewall filters incoming and/or outgoing traffic according to the policy object rules.

The foregoing description has been directed to specific embodiments of this invention. It will be apparent; however, that other variations and modifications may be made to the described embodiments, with the attainment of some or all of their advantages. Therefore, it is the object of the appended claims to cover all such variations and modifications as come within the scope of the invention.

## Claims

1. A firewall program (206, 208) for providing protection for at least one user or resource on a network, the firewall program (206, 208) comprising:
installation means for installing policy rules that are received from at least one network entity by the firewall program (206, 208), **characterised in that** the policy rules comprise an option field (414) for allowing the at least one network entity to send additional information to the firewall program (206, 208), the additional information relating to at least one type of information used in at least one of a Internet Protocol version 6 protocol or a mobile Internet Protocol version 6 protocol.

2. The firewall program (206, 208) of claim 1, wherein the option field (414) comprises at least one code (416) for indicating the type of information stored in the option field (414) and at least one value (418) for the information identified by the at least one code (416).

3. The firewall program (206, 208) of claim 2, wherein the option field (414) comprises at least one code (416) for indicating that at least one of a destination option or a routing option is stored in the option field (414) and at least one value (418) for the at least one of the destination option or the routing option identified by the at least one code (416).

4. The firewall program (206, 208) of claim 2, wherein the option field (414) comprises at least one code (416) for indicating that at least one of Internet Protocol version 6 header options is stored in the option field (414) and at least one value (418) for the at least one of Internet Protocol version 6 header options identified by the at least one code (416).

5. The firewall program (206, 208) of claim 1, wherein the option field (414) comprises means for enabling the firewall program (206, 208) to determine how many types of values (418) are stored in the option field (414).

6. The firewall program (206, 208) of claim 1, wherein the at least one network entity is one of a host system (202, 204) or a processing entity (210, 216) connected to a network.

7. The firewall program (206, 208) of claim 1, wherein the additional information is included in the policy rules, and further wherein the policy rules are used to filter traffic travelling through the network.

8. The firewall program (206, 208) of claim 1, wherein the additional information is related to at least one state to be created, and further wherein the additional information is used to perform services on data travelling through the network.

9. A method for protecting systems connected to at least one firewall (206, 208) by providing additional information to the at least one firewall (206, 208), wherein the method comprises:
receiving policy rules from at least one network entity connected to the at least one firewall (206, 208);
installing the policy rules on the at least one firewall (206, 208), **characterised in that** the policy rules comprise an option field (414) for allowing the at least one network entity to send additional information to the at least one firewall (206, 208), the additional information relating to at least one type of information used in at least one of a Internet Protocol version 6 protocol or a mobile Internet Protocol version 6 protocol.

10. The method of claim 9, further comprising the step of storing, in the option field (414), at least one code (416) for indicating the type of information in the option field (414) and at least one value for the information identified by the at least one code (416).

11. The method of claim 10, further comprising the step of storing, in the option field (414), at least one code (416) for indicating at least one of Internet Protocol version 6 header options and at least one value (418) for the at least one of Internet Protocol version 6 header options identified by the at least one code (416).

12. The method of claim 10, further comprising the step of storing, in the option field (414), at least one code (416) for indicating at least one of a destination option or a routing option and at least one value (418) for the at least one of the destination option or the routing option identified by the at least one code (416).

13. The method of claim 9, further comprising the step of using the option field (414) to enable the firewall (206, 208) to determine how many types of values (418) are stored in the option field (414).

14. The method of claim 9, wherein the additional information is related to at least one state to be created.

15. The method of claim 9, wherein the additional information is used by at least one firewall (206, 208) to perform services on data travelling through the network.

16. The method of claim 9, further comprising using the policy rules to filter traffic travelling through the at least one firewall (206, 208).

17. An apparatus for protecting systems connected to at least one firewall by providing additional information to the at least one firewall, the apparatus comprises:
receiving means for receiving policy rules from at least one network entity;
installation means for installing the policy rules on the at least one firewall (206, 208), **characterised in that** the policy rules comprise an option field for allowing the at least one network entity to send additional information to the at least one firewall (206, 208), the additional information relating to at least one type of information used in at least one of a Internet Protocol version 6 protocol or a mobile Internet Protocol version 6 protocol; and implementation means for using the additional information by the at least one firewall (206, 208) to filter data travelling through the at least one firewall (206, 208).

18. The apparatus of claim 17, further comprising storage means for storing, in the option field (414), at least one code (416) for indicating the type of information in the option field (414) and at least one value (418) for the information identified by the at least one code (416).

19. The apparatus of claim 17, further comprising utilization means for using the option field (414) to enable the firewall (206, 208) to determine how many types of values (418) are stored in the option field (414).

20. The apparatus of claim 17, wherein the at least one network entity is a processing unit (210, 216) connected to a network.

21. A network implementing at least one firewall for providing protection for at least one user or resource on the network, the network comprising an apparatus according to any of claims 17-20, and further comprising:
at least one host system (202, 204) protected by the at least one firewall (206, 208), the host system (202, 204) being configured to send and receive information from external host systems through the at least one firewall (206, 208).

## Patentansprüche

1. Firewall-Programm (206, 208) zum Bieten von Schutz für zumindest einen Benutzer oder Ressource in einem Netzwerk, wobei das Firewall-Programm (206, 208) aufweist:
Installationsmittel zum Installieren von Verfahrensregeln, die durch das Firewall-Programm (206, 208) von zumindest einer Netzwerkeinheit empfangen sind,
**dadurch gekennzeichnet, dass** die Verfahrensregeln ein Optionsfeld (414) enthalten, um der zumindest einen Netzwerkeinheit zu ermöglichen, zusätzliche Informationen an das Firewall-Programm (206, 208) zu senden, wobei die zusätzlichen Informationen sich auf zumindest einen Typ von Information, verwendet in zumindest einem aus einem Internet-Protocol-Version-6-Protocol oder einem Mobile-Internet-Protocol-Version-6-Protocol, beziehen.

2. Firewall-Programm (206, 208) nach Anspruch 1, wobei das Optionsfeld (414) zumindest einen Code (416) zum Anzeigen des Typs der im Optionsfeld (414) gespeicherten Information und zumindest einen Wert (418) für die durch den zumindest einen Code (416) identifizierte Information aufweist.

3. Firewall-Programm (206, 208) nach Anspruch 2, wobei das Optionsfeld (414) zumindest einen Code (416) zum Anzeigen, dass zumindest eine aus einer Zieloption oder einer Routing-Option in dem Optionsfeld (414) gespeichert ist und zumindest einen Wert (418) für die zumindest eine der durch den zumindest einen Code (416) identifizierten Zieloption oder Routing-Option aufweist.

4. Firewall-Programm (206, 208) nach Anspruch 2, wobei das Optionsfeld (414) zumindest einen Code (416) zum Anzeigen, dass zumindest eine von Internet-Protocol-Version-6-Header-Optionen in dem Optionsfeld (414) gespeichert ist und zumindest einen Wert (418) für die zumindest eine der durch den zumindest einen Code (416) identifizierten Internet-Protocol-Version-6-Header-Optionen aufweist.

5. Firewall-Programm (206, 208) nach Anspruch 1, wobei das Optionsfeld (414) Mittel aufweist, um es dem Firewall-Programm (206, 208) zu ermöglichen, zu bestimmen, wie viele Typen von Werten (418) in dem Optionsfeld (414) gespeichert sind.

6. Firewall-Programm (206, 208) nach Anspruch 1, wobei die zumindest eine Netzwerkeinheit eine aus einem Host-System (202, 204) oder einer Verarbeitungseinheit (210, 216), verbunden mit einem Netzwerk, ist.

7. Firewall-Programm (206, 208) nach Anspruch 1, wobei die zusätzliche Information in den Verfahrensregeln enthalten ist, und wobei weiter die Verfahrensregeln verwendet werden, um durch das Netzwerk laufenden Verkehr zu filtern.

8. Firewall-Programm (206, 208) nach Anspruch 1, wobei die zusätzliche Information auf zumindest einen zu erschaffenden Zustand bezogen ist, und wobei weiter die zusätzliche Information verwendet wird, um Dienste an durch das Netzwerk laufenden Daten zu verrichten.

9. Verfahren zum Schützen von mit zumindest einer Firewall (206, 208) verbundenen Systemen durch Bereitstellen zusätzlicher Information an die zumindest eine Firewall (206, 208), wobei das Verfahren aufweist:
Empfangen von Verfahrensregeln von zumindest einer mit der zumindest einen Firewall (206, 208) verbundenen Netzwerkeinheit;
Installieren der Verfahrensregeln auf der zumindest einen Firewall (206, 208),
**dadurch gekennzeichnet, dass** die Verfahrensregeln ein Optionsfeld (414) aufweisen, um es der zumindest einen Netzwerkeinheit zu ermöglichen, zusätzliche Information an die zumindest eine Firewall (206, 208) zu senden, wobei sich die zusätzliche Information auf zumindest einen Typ von in zumindest einem aus einem Internet-Protocol-Version-6-Protocol oder einem Mobile-Internet-Protocol-Version-6-Protocol verwendeter Information bezieht.

10. Verfahren nach Anspruch 9, weiter aufweisend den Schritt des Speicherns, in dem Optionsfeld (414), zumindest eines Codes (416) zum Anzeigen des Typs von Information in dem Optionsfeld (414) und zumindest eines Wertes für die durch den zumindest einen Code (416) identifizierte Information.

11. Verfahren nach Anspruch 10, weiter aufweisend den Schritt des Speicherns, in dem Optionsfeld (414), zumindest eines Codes (416) zum Anzeigen zumindest einer aus Internet-Protocol-Version-6-Header-Optionen und zumindest eines Wertes (418) für die zumindest eine aus durch den zumindest einen Code (416) identifizierten Internet-Protocol-Version-6-Header-Optionen.

12. Verfahren nach Anspruch 10, weiter aufweisend den Schritt des Speicherns, in dem Optionsfeld (414), zumindest eines Codes (416) zum Anzeigen zumindest einer aus einer Zieloption oder einer Routing-Option und zumindest eines Wertes (418) für die zumindest eine aus der Zieloption oder der Routing-Option, die durch den zumindest einen Code (416) identifiziert wird.

13. Verfahren nach Anspruch 9, weiter aufweisend den Schritt des Verwendens des Optionsfeldes (414), um es der Firewall (206, 208) zu ermöglichen, zu bestimmen, wie viele Typen von Werten (418) in dem Optionsfeld (414) gespeichert sind.

14. Verfahren nach Anspruch 9, wobei die zusätzliche Information auf zumindest einen zu erschaffenden Zustand bezogen ist.

15. Verfahren nach Anspruch 9, wobei die zusätzliche Information durch die zumindest eine Firewall (206, 208) verwendet wird, um Dienste an Daten zu verrichten, die durch das Netzwerk laufen.

16. Verfahren nach Anspruch 9, weiter aufweisend Verwenden der Verfahrensregeln, um durch die zumindest eine Firewall (206, 208) laufenden Verkehr zu filtern.

17. Apparat zum Schützen von mit zumindest einer Firewall verbundenen Systemen durch Bereitstellen von zusätzlicher Information an die zumindest eine Firewall, wobei der Apparat aufweist:
Empfangsmittel zum Empfangen von Verfahrensregeln von zumindest einer Netzwerkeinheit; Installationsmittel zum Installieren der Verfahrensregeln auf der zumindest einen Firewall (206, 208), **dadurch gekennzeichnet, dass** die Verfahrensregeln ein Optionsfeld aufweisen, um es der zumindest einen Netzwerkeinheit zu ermöglichen, zusätzliche Information an die zumindest eine Firewall (206, 208) zu senden, wobei sich die zusätzliche Information auf zumindest einen Typ von in zumindest einem aus einem Internet-Protocol-Version-6-Protocol oder einem Mobile-Internet-Protocol-Version-6-Protocol verwendeter Information beziehen; und
Implementierungsmittel zum Verwenden der zusätzlichen Information durch die zumindest eine Firewall (206, 208), um Daten, die durch die zumindest eine Firewall (206, 208) laufen, zu filtern.

18. Apparat nach Anspruch 17, weiter aufweisend Speichermittel zum Speichern, in dem Optionsfeld (414), zumindest eines Codes (416) zum Anzeigen des Typs von Information in dem Optionsfeld (414) und zumindest eines Wertes (418) für die durch den zumindest einen Code (416) identifizierte Information.

19. Apparat nach Anspruch 17, weiter aufweisend Auslastungsmittel zum Verwenden des Optionsfeldes (414), um es der Firewall (206, 208) zu ermöglichen, zu bestimmen, wie viele Typen von Werten (418) in dem Optionsfeld (414) gespeichert sind.

20. Apparat nach Anspruch 17, wobei die zumindest eine Netzwerkeinheit eine mit dem Netzwerk verbundene Verarbeitungseinheit (210, 216) ist.

21. Ein Netzwerk, welches zumindest eine Firewall zum Bieten von Schutz für zumindest einen Benutzer oder eine Ressource in einem Netzwerk implementiert, wobei das Netzwerk einen Apparat nach einem der Ansprüche 17 bis 20 aufweist und weiter aufweist:
zumindest ein Host-System (202, 204), welches durch die zumindest eine Firewall (206, 208) geschützt ist, wobei das Host-System (202, 204) eingerichtet ist, um Information von externen Host-Systemen durch die zumindest eine Firewall (206, 208) zu senden und zu empfangen.

## Revendications

1. Programme pare-feu (206, 208) pour fournir une protection à au moins un utilisateur ou une ressource sur un réseau, le programme pare-feu (206, 208) comprenant :
des moyens d'installation pour installer des règles de politique qui sont transmises par au moins une entité de réseau au programme pare-feu (206, 208), **caractérisé en ce que** les règles de politique comprennent un champ d'options (414) pour permettre à l'au moins une entité de réseau de transmettre des informations additionnelles au programme pare-feu (206, 208), les informations additionnelles concernant au moins un type d'informations utilisées dans au moins une parmi une version 6 du protocole internet ou une version 6 du protocole internet mobile.

2. Programme pare-feu (206, 208) selon la revendication 1, dans lequel le champ d'options (414) comprend au moins un code (416) pour indiquer le type d'informations mémorisées dans le champ d'options (414) et au moins une valeur (418) pour les informations identifiées par l'au moins un code (416).

3. Programme pare-feu (206, 208) selon la revendication 2, dans lequel le champ d'options (414) comprend au moins un code (416) pour indiquer qu'au moins une parmi une option de destination ou une option de routage est mémorisée dans le champ d'options (414) et au moins une valeur (418) pour l'au moins une parmi l'option de destination et l'option de routage identifiée par l'au moins un code (416).

4. Programme pare-feu (206, 208) selon la revendication 2, dans lequel le champ d'options (414) comprend au moins un code (416) pour indiquer qu'au moins une des options d'en-tête de la version 6 du protocole internet est mémorisée dans le champ d'options (414) et au moins une valeur (418) pour l'au moins une des options d'en-tête de la version 6 du protocole internet identifiée par l'au moins un code (416).

5. Programme pare-feu (206, 208) selon la revendication 1, dans lequel le champ d'options (414) comprend le champ d'options (414) comprend des moyens pour permettre au programme pare-feu (206, 208) de déterminer combien de types de valeurs (418) sont mémorisés dans le champ d'options (414).

6. Programme pare-feu (206, 208) selon la revendication 1, dans lequel l'au moins une entité de réseau est un parmi un système hôte (202, 204) ou une entité de traitement (210, 216) connecté au réseau.

7. Programme pare-feu (206, 208) selon la revendication 1, dans lequel des informations additionnelles sont comprises dans les règles de politique et en outre dans lequel les règles de politique sont utilisées pour filtrer le trafic circulant à travers le réseau.

8. Programme pare-feu (206, 208) selon la revendication 1, dans lequel les informations additionnelles sont liées à au moins un état à créer, et en outre dans lequel les informations additionnelles sont utilisées pour effectuer des services sur des données circulant à travers le réseau.

9. Procédé pour protéger des systèmes connectés à au moins un pare-feu (206, 208) en fournissant des informations additionnelles à l'au moins un pare-feu (206, 208), dans lequel le procédé comprend :
la transmission de règles de politique provenant d'au moins une entité de réseau à l'au moins un pare-feu (206, 208) ;
l'installation des règles de politique sur l'au moins un pare-feu (206, 208), **caractérisé en ce que** les règles de politique comprennent un champ d'options (414) pour permettre à l'au moins une entité de réseau de transmettre des informations additionnelles à l'au moins un pare-feu (206, 208), les informations additionnelles concernant au moins un type d'informations utilisées dans au moins une parmi une version 6 du protocole internet ou une version 6 du protocole internet mobile.

10. Procédé selon la revendication 9, comprenant en outre l'étape de mémorisation, dans le champ d'options (414), d'au moins un code (416) pour indiquer le type d'informations mémorisées dans le champ d'options (414) et d'au moins une valeur (418) pour les informations identifiées par l'au moins un code (416).

11. Procédé selon la revendication 10, comprenant en outre l'étape de mémorisation, dans le champ d'options (414), d'au moins un code (416) pour indiquer au moins une des options d'en-tête de la version 6 du protocole internet est mémorisée dans le champ d'options (414) et d'au moins une valeur (418) pour l'au moins une des options d'en-tête de la version 6 du protocole internet identifiée par l'au moins un code (416).

12. Procédé selon la revendication 10, comprenant en outre l'étape de mémorisation, dans le champ d'options (414), d'au moins un code (416) pour indiquer au moins une parmi une option de destination ou une option de routage pour l'au moins une parmi l'option de destination et l'option de routage identifiée par l'au moins un code (416).

13. Procédé selon la revendication 9, comprenant en outre l'étape d'utilisation du champ d'options (414) pour permettre au pare-feu (206, 208) de déterminer combien de types de valeurs (418) sont mémorisés dans le champ d'options (414).

14. Procédé selon la revendication 9, dans lequel les informations additionnelles sont liées à au moins un état à créer.

15. Procédé selon la revendication 9, dans lequel les informations additionnelles sont utilisées par au moins un pare-feu (206, 208) pour effectuer des services sur des données circulant à travers le réseau.

16. Procédé selon la revendication 9, comprenant en outre l'utilisation des règles de politique pour filtrer le trafic circulant à travers l'au moins un pare-feu (206, 208).

17. Dispositif pour protéger des systèmes connectés à au moins un pare-feu en fournissant des informations additionnelles à l'au moins un pare-feu, le dispositif comprenant :
des moyens de réception pour recevoir des règles de politique provenant d'au moins une entité de réseau;
des moyens d'installation pour installer les règles de politique sur l'au moins un pare-feu (206, 208), **caractérisé en ce que** les règles de politique comprennent un champ d'options pour permettre à l'au moins une entité de réseau de transmettre des informations additionnelles à l'au moins un pare-feu (206, 208), les informations additionnelles concernant au moins un type d'informations utilisées dans au moins une parmi une version 6 du protocole internet ou une version 6 du protocole internet mobile ; et des moyens de mise en oeuvre pour utiliser les informations additionnelles par l'au moins un pare-feu (206, 208) pour filtrer le trafic circulant à travers l'au moins un pare-feu (206, 208).

18. Dispositif selon la revendication 17, comprenant en outre des moyens de mémoire pour mémoriser, dans le champ d'options (414), au moins un code (416) pour indiquer le type d'informations mémorisées dans le champ d'options (414) et au moins une valeur (418) pour les informations identifiées par l'au moins un code (416).

19. Dispositif selon la revendication 17, comprenant en outre des moyens d'utilisation pour utiliser le champ d'options (414) pour permettre au programme pare-feu (206, 208) de déterminer combien de types de valeurs (418) sont mémorisés dans le champ d'options (414).

20. Dispositif selon la revendication 17, dans lequel l'au moins une entité de réseau est une unité de traitement (210, 216) connectée à un réseau.

21. Réseau mettant en oeuvre au moins un pare-feu pour fournir une protection à au moins un utilisateur ou une ressource sur un réseau, le réseau comprenant un dispositif selon l'une quelconque des revendications 17 à 20, et comprenant en outre :
au moins un système hôte (202, 204) protégé par l'au moins un pare-feu (206, 208), le système hôte (202, 204) étant configuré pour transmettre et recevoir des informations provenant de systèmes hôtes externes à travers l'au moins un pare-feu (206, 208).
